(19) **Europäisches Patentamt**
**European Patent Office**
**Office européen des brevets**

(11) **EP 3 682 520 B1**

(12) **EUROPEAN PATENT SPECIFICATION**

(45) Date of publication and mention
of the grant of the patent:
**11.05.2022  Bulletin 2022/19**

(21) Application number: **18782194.7**

(22) Date of filing: **11.09.2018**

(51) International Patent Classification (IPC):
**H02J 3/18** $^{(2006.01)}$       **G01R 21/00** $^{(2006.01)}$
**G05F 1/70** $^{(2006.01)}$

(52) Cooperative Patent Classification (CPC):
**H02J 3/1828; G05F 1/70;** Y02E 40/30

(86) International application number:
**PCT/IB2018/056903**

(87) International publication number:
**WO 2019/049101 (14.03.2019 Gazette 2019/11)**

(54) **APPARATUS AND METHOD FOR THE REGULATION OF THE REACTIVE POWER IN ELECTRICAL SYSTEMS**

VORRICHTUNG UND VERFAHREN ZUR REGELUNG DER REAKTIVEN ENERGIE IN ELEKTRISCHEN SYSTEMEN

APPAREIL ET PROCÉDÉ DE RÉGULATION DE LA PUISSANCE RÉACTIVE DANS DES SYSTÈMES ÉLECTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **11.09.2017  IT 201700101411**

(43) Date of publication of application:
**22.07.2020  Bulletin 2020/30**

(73) Proprietor: **Ducati Energia S.p.A.**
**40132 Bologna (IT)**

(72) Inventors:
• **GUERRIERI, Luca**
**40132 Bologna (BO) (IT)**
• **MIMMI, Alessandro**
**40132 Bologna (BO) (IT)**

(74) Representative: **Brunacci, Marco**
**BRUNACCI & PARTNERS S.r.l.**
**Via Pietro Giardini, 625**
**41125 Modena (MO) (IT)**

(56) References cited:
**US-A1- 2004 164 718     US-A1- 2008 106 241**
**US-A1- 2016 043 635**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an apparatus and method for the regulation of the reactive power in electrical systems.

Background Art

It is well known that for problems mainly related to the efficiency of electricity generators, the electricity supplier requires users to limit the reactive power absorbed by industrial plants.

In fact, in order not to incur penalties, the power factor of an industrial plant must necessarily have a value greater than a predefined minimum threshold.

It is also known that the reactive power of an industrial plant is in the vast majority of cases inductive (an electric motor, for example, absorbs inductive reactive power from the grid).

To overcome these drawbacks, special industrial power factor correction switchboards are widely used.

In particular, an industrial power factor correction switchboard allows compensating the inductive reactive power of the plant load by automatically inserting and disconnecting the sets of capacitors placed in parallel with the plant loads.

A power-factor regulator (also called "cosfi regulator" or "reactive power regulator") is the regulating unit which, with respect to the reactive power measured at the plant load, commands the start of the most suitable sets of capacitors to obtain the desired power factor.

More specifically, the regulator acts on the sets of capacitors by closing the digital outputs with which it is equipped, outputs which are connected to the sets themselves by means of appropriate contactors.

The power factor and the other relevant electrical quantities for power factor correction equipment are obtained from the measurements of current (I) and voltage (V).

With reference to a three-phase network, the load of a system can be characterized by three phase voltages V1N, V2N, V3N (or, in the absence of the neutral reference, relative linked voltages V12, V23, V31) and three phase currents I1, I2, I3.

In a symmetrical, stable and balanced three-phase system, the three voltages V1N, V2N, V3N (or V12, V23, V31) are equal in amplitude and are phase displaced by 120° the one to the other, while the three currents 11, 12, 13 are stable and balanced.

It follows that in such systems the power factors of each phase are equal to each other. Therefore, with these conditions it is enough to measure one of the three voltages and one of the three currents to know the entire system.

It is usually possible to approximate industrial electrical systems to symmetrical, stable and balanced three-phase systems and for this reason known regulators do generally have only one voltage input and only one current input. The most advanced regulators can manage unbalanced/balanced systems and therefore have three voltage inputs (with and without neutral) and three current inputs to correct unbalanced systems.

Commonly, with reference to a regulator with only one voltage measuring input and only one current measuring input, insertion means the specific combination of voltage and current connected to the regulator.

The power factor regulators of known type do however have some drawbacks.

In actual facts, it is very important that when starting up the system, the user correctly configures the actual insertion made so as not to have incorrect measurement values and, consequently, an incorrect power factor correction by the regulator.

However, in practice this is a real problem, as an incorrect configuration can occur in many cases, e.g., due to the lack of appropriate marking on the system cables, a lack of knowledge of three-phase systems by the installer or, in any case, due to connection errors in general.

With reference instead to regulators with three voltage measuring inputs and three current measuring inputs, for which it is not necessary to configure the type of insertion, connection errors can also occur and also lead to incorrect measurements and power factor correction failure.

Furthermore, in general, the sets of capacitors undergo a process of wear over time, resulting in a lowering of the reactive power value.

In addition, the sets of capacitors may be incorrectly connected (e.g. false contacts) or, in some cases, may be subject to faults.

For the above reasons it would be very useful to know (or at least estimate) the trend over time of the value of the sets of capacitors, both with regard to the efficiency of the power factor correction, and in order to optimize the maintenance operations on the apparatus.

In fact, in the event of a set of capacitors being unloaded, broken or badly connected, the user may not notice or, however, would hardly be able to identify the reason why the apparatus does not work at its best.

Document US 2008/106241 A1 discloses a device for providing power factor correction of a low voltage subnet that includes a low voltage feeder line that is connected to one or more low voltage power supply lines that supply power to one or more customer premises.

Documents US 2016/043635 A1 and US 2004/164718 A1 disclose as well examples of apparatuses for the regulation of the reactive power in electrical systems using a set of capacitors.

Description of the Invention

The main aim of the present invention is to provide an apparatus and a method for the regulation of the reactive power in electrical systems which make it possible to avoid the incorrect configuration of the insertion, i.e., the specific combination of voltage and current of the electrical system connected to the apparatus itself.

Another object of the present invention is to provide an apparatus and a method for the regulation of the reactive power in electrical systems which make it possible to detect the trend over time of the value of the sets of capacitors, as well as any faults or incorrect connections of the sets themselves.

Another object of the present invention is to provide an apparatus and a method for the regulation of the reactive power in electrical systems which allows overcoming the aforementioned drawbacks of the prior art within the scope of a simple, rational, easy, efficient to use and cost-effective solution.

The aforementioned objects are achieved by the present apparatus for the regulation of the reactive power in electrical systems according to the characteristics of claim 1.

The aforementioned objects are achieved by the present method for the regulation of the reactive power in electrical systems according to the characteristics of claim 9.

Brief Description of the Drawings

Other characteristics and advantages of the present invention will become more evident from the description of a preferred, but not exclusive embodiment of an apparatus and a method for the regulation of the reactive power in electrical systems, illustrated by way of an indicative, but non-limiting example, in the attached drawings in which:

Figure 1 is a general diagram of the apparatus according to the invention;

Figure 2 is a block diagram which illustrates the method according to the invention;

Figure 3 is a table which illustrates possible values of a phase displacement constant used by the apparatus and by the method according to the invention;

Figures 4 and 5 are graphs which illustrate the calculation of a differential vector by means of the apparatus and the method according to the invention.

Embodiments of the Invention

With particular reference to these figures, reference numeral 1 globally indicates an apparatus for the regulation of the reactive power in electrical systems.

In particular, the apparatus 1 is usable in industrial power factor correction switchboards and is capable of automatically inserting and disconnecting the sets of capacitors 4 placed in parallel with the load 5 of an electrical system 3, in order to compensate the inductive reactive power of the load 5 of the system itself.

For this purpose, the apparatus 1 is equipped with a regulating unit 2 which, according to the reactive power measured on the load 5 of the electrical system 3, commands the insertion of the most suitable sets of capacitors 4 to obtain the desired power factor.

Advantageously, in order to overcome the limits of known solutions, the apparatus 1 is provided with an automatic detection unit 6 configured to automatically detect the type of connection (commonly known as "insertion") made with the electrical system 3.

Preferably, the apparatus 1 is provided with a voltage measuring input and with a current measuring input.

In this description, the terms "type of connection" or "insertion" mean the specific combination of voltage and current connected to the regulating unit 2 of the apparatus 1.

More specifically, FF1 is used to define all the insertions in which are connected a linked voltage and the current in quadrature (e.g.: V12 and 13). FF2 is used to define all the insertions in which is connected a linked voltage and the current relative to the first of the two phases of the linked voltage (e.g.: V12 and II).

FF3 is used to define all the insertions in which is connected a linked voltage and the current relative to the second of the two phases of the linked voltage (e.g.: V12 and 12).

FN1 is used to define all the insertions in which is connected a phase voltage and the current of the same phase (e.g.: V1N and I1).

FN2 is used to define all the insertions in which is connected a phase voltage and the current of the phase at 120 degrees which is delayed with respect to the voltage itself (e.g.: V1N and 12).

FN3 is used to define all the insertions in which is connected a phase voltage and the current of the phase at 120 degrees which is advanced with respect to the voltage itself (e.g.: V1N and 13).

Therefore, the automatic detection unit 6 allows automatically detecting and configuring the insertion made, exempting the operator from manual configuration.

The automatic detection unit 6 can be implemented by means of a suitable hardware and a suitable software algorithm.

More specifically, the operations carried out by the automatic detection unit 6 are based on the vector calculation applied during an initial phase of commissioning of the apparatus 1, which involves the cyclical insertion of all the sets of capacitors 4.

In order to carry out these operations, it is assumed that the current and voltage system of the electrical system 3 is symmetrical, stable and balanced. In the light of this initial assumption, therefore, it is possible to simplify a three-phase system with a single-phase system describing, therefore, the system with a single voltage and a single current.

Consequently, it is possible to trace every possible type of insertion back to a single-phase system thus transforming the linked voltage into the phase-neutral voltage of the same phase of the connected current (in fact, it is possible to systematically apply a constant phase displacement).

In the vector plane, the load (which also comprises any inserted sets of capacitors) is represented by a vector the phase displacement of which is the phi angle between voltage and current and the components of which represent the active power in W (real part) and the reactive power in VAr (imaginary part). More specifically, a purely capacitive load (such as a set of capacitors) is represented by a vector with nil active power component and with negative reactive power component and equal in module to the power of the set (the phi angle is equal to -90°).

A purely inductive load is represented by a vector with nil active power component and with positive reactive power component (the phi angle is equal to +90°).

An ohmic-inductive load is represented by a vector with positive active and reactive power components.

An ohmic-capacitive load is represented by a vector with positive active power components and negative reactive power components.

Having the all of the above, the characteristics and operation of the apparatus 1 according to the invention are described here below.

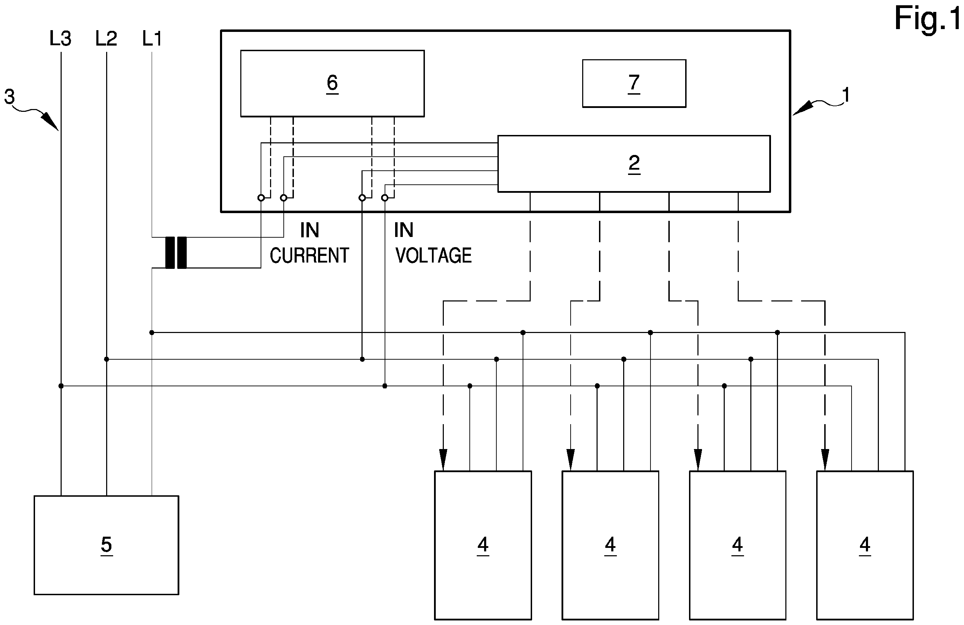

Figure 1 shows a general block diagram of the apparatus 1. Specifically, by way of example, Figure 1 shows a connection of the FF1 type, in which are connected a linked voltage and the current in quadrature (V23 and I1).

The apparatus 1 for the regulation of the reactive power in electrical systems comprises at least one regulating unit 2 of the reactive power operatively connected to an electrical system 3 and to at least one set of capacitors 4.

The regulating unit 2 is configured to connect/disconnect the set of capacitors 4 to/from at least one load 5 of the electrical system 3 according to the reactive power measured on the load itself, in order to obtain a desired power factor. Specifically, the regulating unit 2 operates on the sets of capacitors 4 by closing the digital outputs with which it is provided, these outputs being connected to the sets themselves by means of suitable contactors.

Advantageously, the apparatus 1 comprises at least one automatic detection unit 6 which is configured to detect the specific type of connection carried out between the regulating unit 2 and the current/voltage lines LI, L2, L3 of the electrical system 3.

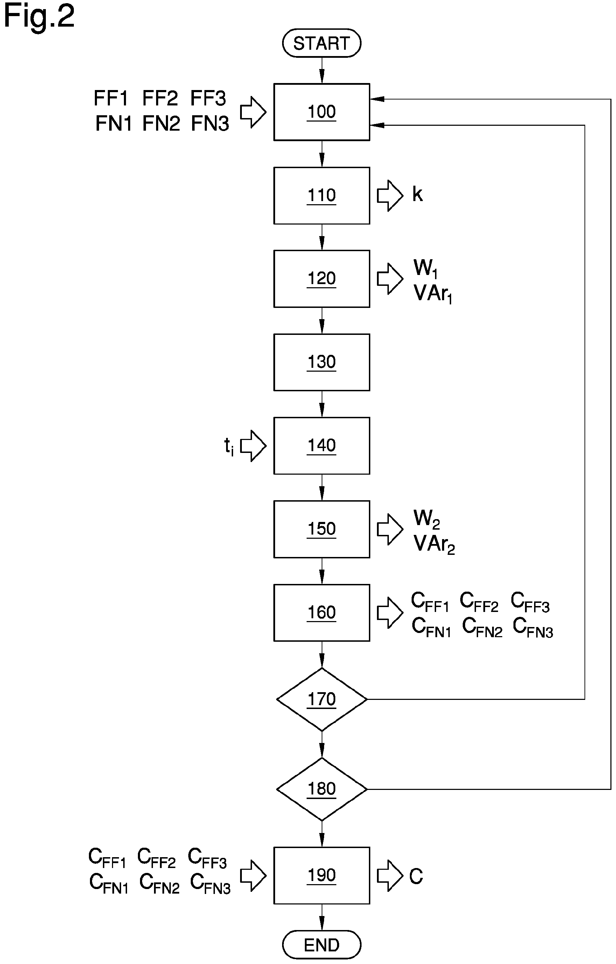

In particular, the automatic detection unit 6 is configured to perform at least the following steps, schematized in Figure 2:

- selecting a type of connection out of the possible types of connection FF1, FF2, FF3, FN1, FN2, FN3 between the regulating unit 2 and the electrical system 3 (step 100);
- setting a phase displacement constant K that characterizes the phase difference between voltage and current of the selected connection (step 110);
- measuring first vector components of active power $W_1$ and reactive power $VAr_1$ of the load 5 before insertion of a set of capacitors 4 (step 120);
- connecting one set of capacitors 4 in parallel with the load 5 (step 130);
- measuring second vector components of active power $W_2$ and reactive power $VAr_2$ of the load 5 after insertion of the set of capacitors 4 (step 150);
- calculating a differential vector $C_{FF1}$, $C_{FF2}$, $C_{FF3}$, $C_{FN1}$, $C_{FN2}$ or $C_{FN3}$ as the difference between the second vector components $W_2$, $VAr_2$ and the first vector components $W_1$, $VAr_1$ (step 160).

In particular, the differential vector C corresponds to the vector which describes the set of capacitors 4 with reference to the specific type of connection selected out of the possible types of connection FF1, FF2, FF3, FN1, FN2, FN3.

The automatic detection unit 6 is configured to repeat the aforementioned steps for all possible types of connection FF1, FF2, FF3, FN1, FN2, FN3 (step 170). Therefore, as a result of such processing, the automatic detection unit 6 will have calculated a plurality of differential vectors $C_{FF1}$, $C_{FF2}$, $C_{FF3}$, $C_{FN1}$, $C_{FN2}$, $C_{FN3}$ relative to respective types of connection FF1, FF2, FF3, FN1, FN2, FN3. Finally, the automatic detection unit 6 is configured to select, out of all possible types of connection FF1, FF2, FF3, FN1, FN2, FN3, the only connection for which the calculated differential vector $C_{FF1}$, $C_{FF2}$, $C_{FF3}$, $C_{FN1}$, $C_{FN2}$, $C_{FN3}$ has a nil active power component (step 190).

In fact, the insertion actually made on the connections is the one that describes the set of capacitors 4 connected to the load 5 and for which the measured differential vector has:

- the active power component is nil;
- the reactive power component is non-nil and equal to the power value of the set of capacitors.

This is due to the fact that the set of capacitors corresponds to a vector with nil active power. Consequently, the differential vector obtained after the calculation is precisely that corresponding to the set of capacitors.

Usefully, the automatic detection unit 6 is configured to repeat all the steps from 100 to 170 for a plurality of test connections of the set of capacitors 4 carried out at the start of the apparatus 1 (step 180).

This way any margin of error can be further reduced.

Moreover, the automatic detection unit 6 is preferably configured to carry out, after connecting the set of capacitors 4 (step 130) and prior to the measurement of the second vector components of active power $W_2$ and reactive power $VAr_2$ (step 150), a further waiting step for a predefined insertion transition time $t_i$ (step 140).

In particular, defined as a on/off transition time is the time period following an insertion/disconnection maneuver of a set of capacitors during which the measured current and voltage have transition trends (typically of the second order) which deviate from normal use values (typically the transition lasts from 100ms to 200ms).

The measurement electronics of the apparatus 1 have a sufficiently high speed to allow voltage and current to be measured immediately before (20ms max) and immediately after (20ms max) the on/off transition time.

As regards the setting of the phase displacement constant K which characterizes the phase difference between voltage and current of the selected connection (step 110), preferably this phase displacement constant K is set according to the specific selected type of connection FF1, FF2, FF3, FN1, FN2, FN3.

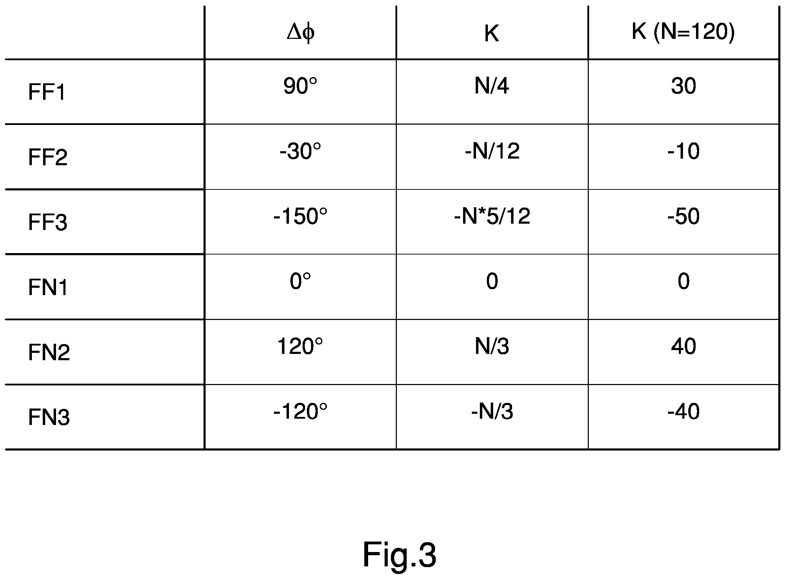

In particular, possible and preferred values of the phase displacement constant K are shown on the table in Figure 3, where:

The following parameters are indicated on this table:

  $\Delta\phi$: intrinsic phase displacement offset angle given by the type of insertion;
  K: number of samples corresponding to the offset angle expressed in terms of the total number of samples acquired for a network period (N).

The last column of the table in Figure 3 shows an example of the values taken by the parameter K with N=120.

With reference to the measurement of the first vector components of active power $W_1$ and reactive power VAn (step 120), these components are calculated using the following formulas:

$$W_1 = \frac{1}{N} \sum_{i=1}^{N} v_{(i-K)} \, i_i$$

$$VAr_1 = \sqrt{VA_1^2 - W_1^2}$$

where $VA_1$ is the apparent power before the insertion of the set of capacitors 4 and is calculated using the following formula:

$$VA_1 = V_{RMS} \times I_{RMS}$$

with $V_{RMS}$ and $I_{RMS}$ as efficient values of voltage and current calculated using the following formulas:

$$V_{RMS} = \sqrt{\frac{1}{N} \sum_{i=1}^{N} v_i^2}$$

$$I_{RMS} = \sqrt{\frac{1}{N} \sum_{i=1}^{N} i_i^2}$$

It is also pointed out the specific power factor is calculated using the following formula:

$$PF_1 = \frac{W_1}{VA_1}$$

With reference to the measurement of the second vector components of active power $W_2$ and reactive power $VAr_2$ (step 150), these components are calculated using the following formulas:

$$W_2 = \frac{1}{N} \sum_{i=1}^{N} v_{(i-K)} \, i_i$$

$$VAr_2 = \sqrt{VA_2^2 - W_2^2}$$

where $VA_2$ is the apparent power following the insertion of the set of capacitors 4 and is calculated using the following formula:

$$VA_2 = V_{RMS} \times I_{RMS}$$

with $V_{RMS}$ and $I_{RMS}$ as efficient values of voltage and current calculated using the following formulas:

$$V_{RMS} = \sqrt{\frac{1}{N} \sum_{i=1}^{N} v_i^2}$$

$$I_{RMS} = \sqrt{\frac{1}{N} \sum_{i=1}^{N} i_i^2}$$

It is also pointed out the specific power factor is calculated using the following formula:

$$PF_2 = \frac{W_2}{VA_2}$$

It should be noted that the formulas detailed above relate to RMS (Root Mean Square) values. Such formulas can be replaced by corresponding formulas deriving from the Fourier analysis, considering only the component at the nominal mains frequency (50Hz/60Hz).

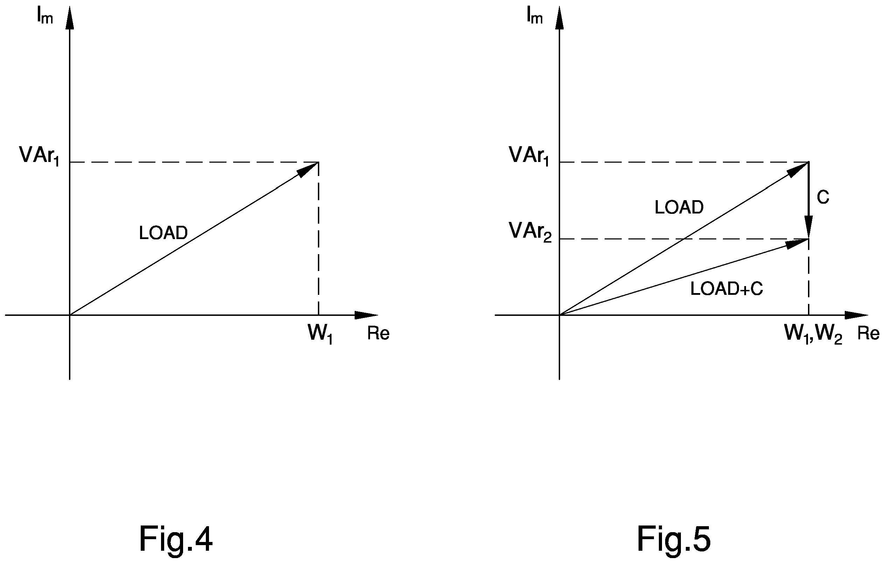

As regards the calculation of the differential vector C as the difference between the second vector components $W_2$, $VAr_2$ and the first vector components W1, VAn (step 160), this operation is illustrated graphically in Figures 4 and 5.

In particular, Figure 4 illustrates a possible vector deriving from the vector components of active power $W_1$ and reactive power $VAr_1$ of the load 5 measured before insertion of a set of capacitors 4 (step 120).

Figure 5, in addition to this vector, shows the vector deriving from the vector components of active power $W_2$ and reactive power $VAr_2$ of the load 5 measured after insertion of the set of capacitors 4 (step 150).

The differential vector C is determined as the difference between the two vectors and corresponds to the vector which describes the set of capacitors 4 with reference to the specific type of connection selected out of the possible types of connection FF1, FF2, FF3, FN1, FN2, FN3.

Figure 5, in particular, shows the differential vector C corresponding to the insertion actually carried out on the connections, i.e. the differential vector C such that:

- the active power component is nil;
- the reactive power component is non-nil and equal to the power value of the set of capacitors.

Advantageously, the apparatus 1 also comprises at least one automatic measuring unit for measuring the value of the powers of the sets of capacitors 4, schematically illustrated in Figure 1 with reference 7.

In particular, for this purpose the reactive power component of the differential vector C is used which, as shown above, corresponds to the power value of the set of capacitors 4.

This way, the apparatus 1 allows detecting the trend over time of the value of the sets of capacitors, as well as any faults or incorrect connections of the sets themselves, and signaling the replacement thereof or, in any case, commanding accordingly their insertion in a suitable manner.

The method according to the invention for the regulation of the reactive power in electrical systems is described below.

The method according to the invention comprises at least the following steps, shown schematically in Figure 2:

- a step 100 of selecting a type of connection out of the possible types of connection FF1, FF2, FF3, FN1, FN2, FN3 with an electrical system 3;
- a step 110 of setting a phase displacement constant K that characterizes the phase difference between voltage and current of the selected connection;
- a step 120 of measuring first vector components of active power $W_1$ and reactive power $VAr_1$ of the load 5 before the insertion of at least one set of capacitors 4;
- a step 130 of connecting the set of capacitors 4 in parallel with the load 5;
- a step 150 of measuring second vector components of active power $W_2$ and reactive power $VAr_2$ of the load 5 after the insertion of the set of capacitors 4;
- a step 160 of calculating a differential vector $C_{FF1}$, $C_{FF2}$, $C_{FF3}$, $C_{FN1}$, $C_{FN2}$ or $C_{FN3}$ as the difference between the second vector components $W_2$, $VAr_2$ and the first vector components $W_1$, $VAr_1$;

In particular, each calculated differential vector $C_{FF1}$, $C_{FF2}$, $C_{FF3}$, $C_{FN1}$, $C_{FN2}$, $C_{FN3}$ corresponds to the vector which describes the set of capacitors 4 with reference to the respective possible types of connection FF1, FF2, FF3, FN1, FN2, FN3.

The method therefore comprises a step 180 of repeating the aforementioned steps for all possible types of connection FF1, FF2, FF3, FN1, FN2, FN3. Therefore, following this step 180, a plurality of differential vectors $C_{FF1}$, $C_{FF2}$, $C_{FF3}$, $C_{FN1}$, $C_{FN2}$, $C_{FN3}$ relative to respective types of connection FF1, FF2, FF3, FN1, FN2, FN3 are calculated.

Finally, the method comprises a step 190 of selecting, out of all possible types of connection FF1, FF2, FF3, FN1, FN2, FN3, the only connection for which the calculated differential vector $C_{FF1}$, $C_{FF2}$, $C_{FF3}$, $C_{FN1}$, $C_{FN2}$, $C_{FN3}$ has a nil active power component. This differential vector with nil active power component is shown in Figure 2 with reference C.

Usefully, the method can provide a further step 180 which consists in repeating all the steps from 100 to 170 for a plurality of test connections of the set of capacitors 4 made at the start of the apparatus 1.

In this way any error margins can be further reduced.

Moreover, preferably, the method may comprise, subsequently to step 130 of connecting the set of capacitors 4 and prior to the step 150 of measuring the second vector components of active power $W_2$ and reactive power $VAr_2$, a further step 140 of waiting for a predefined insertion transition time $t_i$.

As far as the setting of the phase displacement constant K is concerned characterizing the phase difference between voltage and current of the selected connection (step 110), this phase displacement constant K is preferably set according to the specific selected type of connection FF1, FF2, FF3, FN1, FN2, FN3.

In particular, possible and preferred values of the phase displacement constant K are shown in table of Figure 3, wherein:

With reference to the measurement of the first vector components of active power $W_1$ and reactive power $VAr_1$ (step 120), the method provides for the calculation of these components using the following formulas:

$$W_1 = \frac{1}{N} \sum_{i=1}^{N} v_{(i-k)} \, i_i$$

$$VAr_1 = \sqrt{VA_1^2 - W_1^2}$$

where $VA_1$ is the apparent power before the insertion of the set of capacitors 4 and is calculated using the following formula:

$$VA_1 = V_{RMS} \times I_{RMS}$$

with $V_{RMS}$ and $I_{RMS}$ as efficient values of voltage and current calculated using the following formulas:

$$V_{RMS} = \sqrt{\frac{1}{N} \sum_{i=1}^{N} v_i^2}$$

$$I_{RMS} = \sqrt{\frac{1}{N} \sum_{i=1}^{N} i_i^2}$$

It is also pointed out that the specific power factor is calculated using the following formula:

$$PF_1 = \frac{W_1}{VA_1}$$

With reference to the measurement of the second vector components of active power $W_2$ and reactive power $VAr_2$ (step 150), the method provides for the calculation of these components using the following formulas:

$$W_2 = \frac{1}{N} \sum_{i=1}^{N} v_{(i-k)} \, i_i$$

$$VAr_2 = \sqrt{VA_2^2 - W_2^2}$$

where $VA_2$ is the apparent power after the insertion of the set of capacitors 4 and is calculated using the following formula:

$$VA_2 = V_{RMS} \times I_{RMS}$$

with $V_{RMS}$ and $I_{RMS}$ as efficient values of voltage and current calculated using the following formulas:

$$V_{RMS} = \sqrt{\frac{1}{N} \sum_{i=1}^{N} v_i^2}$$

$$I_{RMS} = \sqrt{\frac{1}{N} \sum_{i=1}^{N} i_i^2}$$

It is also pointed out that the specific power factor is calculated using the following formula:

$$PF_2 = \frac{W_2}{VA_2}$$

It should be noted that the formulas detailed above concern RMS values (effective value). These formulas can be replaced by corresponding formulas deriving from the Fourier analysis, considering the only component at the nominal mains frequency (50Hz/60Hz).

As regards the calculation of the differential vector C as the difference between the second vector components $W_2$, $VAr_2$ and the first vector components $W_1$, VAn (step 160), this operation is graphically illustrated in Figures 4 and 5.

In particular, Figure 4 illustrates a possible vector deriving from the vector components of active power $W_1$ and reactive power $VAr_1$ of the load 5 measured before the insertion of a set of capacitors 4 (step 120).

Figure 5, in addition to this vector, also shows the vector deriving from the vector components of active power $W_2$ and reactive power $VAr_2$ of the load 5 measured after the insertion of the set of capacitors 4 (step 150).

The differential vector C is determined as the difference between the two vectors and corresponds to the vector which describes the set of capacitors 4 with reference to the specific type of connection selected out of the possible types of connection FF1, FF2, FF3, FN1, FN2, FN3.

Figure 5, in particular, shows the differential vector C corresponding to the insertion actually carried out on the connections, i.e. the differential vector C such that:

- the active power component is nil;
- the reactive power component is non-nil and equal to the power value of the set of capacitors.

Advantageously, moreover, the method according to the invention can comprise a phase of automatic measurement of the power value of the sets of capacitors 4. In particular, for this purpose the reactive power component of the differential vector C is used which, as shown above, corresponds to the power value of the set of capacitors 4.

This way, the apparatus 1 permits detecting the trend over time of the value of the sets of capacitors, as well as any faults or incorrect connections of the sets themselves, and signaling their replacement or, in any case, commanding accordingly their insertion in a suitable manner.

It has in practice been found that the described invention achieves the intended objects.

In particular, the fact is underlined that the apparatus and the method according to the invention permit avoiding an incorrect configuration of the insertion, i.e., of the specific combination of voltage and current of the electrical system connected to the apparatus itself.

Moreover, the apparatus and the method according to the invention allow detecting the trend over time of the value of the sets of capacitors, as well as any faults or incorrect connections of the sets themselves.

**Claims**

1. Apparatus (1) for the regulation of the reactive power in electrical systems, comprising at least one regulating unit (2) of the reactive power operatively connected to an electrical system (3) and to at least one set of capacitors (4), said regulating unit (2) being configured to connect/disconnect said set of capacitors (4) to/from at least one load (5) of said electrical system (3) according to the reactive power measured on the load (5) and to obtain a desired power factor, **characterized by** the fact that it comprises at least one automatic detection unit (6) of the type of connection carried out between said regulating unit (2) and the current/voltage lines of said electrical system (3), said automatic detection unit (6) being configured to make at least the following steps:

a. selecting a type of connection out of the possible types of connection (FF1, FF2, FF3, FN1, FN2, FN3) between said regulating unit (2) and said electrical system (3);

b. setting a phase displacement constant (K) that characterizes the phase difference between voltage and current of said selected connection;

c. measuring first vector components of active power ($W_1$) and reactive power ($VAr_1$) of said load (5) before insertion of said set of capacitors (4);

d. connecting said set of capacitors (4) to said load (5);

e. measuring second vector components of active power ($W_2$) and reactive power ($VAr_2$) of said load (5) after insertion of said set of capacitors (4);

f. calculating a differential vector ($C_{FF1}$, $C_{FF2}$, $C_{FF3}$, $C_{FN1}$, $C_{FN2}$, $C_{FN3}$) as the difference between said second vector components ($W_2$, $VAr_2$) and said first vector components ($W_1$, $VAr_1$);

g. repeating all the aforementioned steps for all possible types of connection (FF1, FF2, FF3, FN1, FN2, FN3) between said regulating unit (2) and said electrical system (3);

h. out of all possible types of connection (FF1, FF2, FF3, FN1, FN2, FN3), select the only connection for which the relevant calculated differential vector (C) has a nil active power component.

2. Apparatus (1) according to claim 1, **characterized by** the fact that said automatic detection unit (6) is configured to repeat all the a-g steps for a plurality of test connections of said set of capacitors (4) to said load (5) carried out at the start of said apparatus (1).

3. Apparatus (1) according to one or more of the preceding claims, **characterized by** the fact that said automatic detection unit (6) is configured to carry out at least one step of waiting for a predefined transition insertion time ($t_i$), after said step of connecting the set of capacitors (4) to the load (5).

4. Apparatus (1) according to one or more of the preceding claims, **characterized by** the fact that it comprises at least one automatic measuring unit (7) for measuring the value of powers of said at least one set of capacitors (4).

5. Apparatus (1) according to one or more of the preceding claims, **characterized by** the fact that said regulating unit (2) is provided with a voltage measuring input and with a current measuring input.

**6.** Apparatus (1) according to one or more of the preceding claims, **characterized by** the fact that said phase displacement constant (K) is set according to the selected type of connection (FF1, FF2, FF3, FN1, FN2, FN3).

**7.** Apparatus (1) according to one or more of the preceding claims, **characterized by** the fact that said first vector components of active power ($W_1$) and reactive power ($VAr_1$) are calculated using the following formulas:

$$W_1 = \frac{1}{N} \sum_{i=1}^{N} v_{(i-K)} \, i_i$$

$$VAr_1 = \sqrt{VA_1^2 - W_1^2}$$

where $VA_1$ is the apparent power before the insertion of the set of capacitors (4).

**8.** Apparatus (1) according to one or more of the preceding claims, **characterized by** the fact that said second vector components of active power ($W_2$) and reactive power ($VAr_2$) are calculated using the following formulas:

$$W_2 = \frac{1}{N} \sum_{i=1}^{N} v_{(i-K)} \, i_i$$

$$VAr_2 = \sqrt{VA_2^2 - W_2^2}$$

where $VA_2$ is the apparent power following the insertion of the set of capacitors (4).

**9.** Method for the regulation of the reactive power in electrical systems, comprising at least one regulating step of the reactive power of an electrical system (3), said regulating step being adapted to connect/disconnect at least one set of capacitors (4) to/from at least one load (5) of said electrical system (3) according to the reactive power measured on the load (5) and to obtain a desired power factor, **characterized by** the fact that it comprises at least one automatic detection step of the type of connection carried out with said electrical system (3), wherein said automatic detection step comprises at least the following steps:

    a. a step (100) of selecting a type of connection out of the possible types of connection (FF1, FF2, FF3, FN1, FN2, FN3) with an electrical system (3);
    b. a step (110) of setting a phase displacement constant (K) that characterizes the phase difference between voltage and current of said selected connection;
    c. a step (120) of measuring first vector components of active power ($W_1$) and reactive power ($VAr_1$) of a load (5) of said electrical system (3) before the insertion of at least one set of capacitors (4);
    d. a step (130) of connecting said set of capacitors (4) to said load (5);
    e. a step (150) of measuring second vector components of active power ($W_2$) and reactive power ($VAr_2$) of said load (5) after the insertion of said set of capacitors (4);
    f. a step (160) of calculating a differential vector ($C_{FF1}$, $C_{FF2}$, $C_{FF3}$, $C_{FN1}$, $C_{FN2}$, $C_{FN3}$) as the difference between said second vector components ($W_2$, $VAr_2$) and said first vector components ($W_1$, $VAr_1$);
    g. a step (170) of repeating all the aforementioned steps for all possible types of connection (FF1, FF2, FF3, FN1, FN2, FN3) between said regulating unit (2) and said electrical system (3);
    h. a step (190) of selecting, out of all possible types of connection (FF1, FF2, FF3, FN1, FN2, FN3), the only connection for which the relevant calculated differential vector (C) has a nil active power component.

**10.** Method according to claim 9, **characterized by** the fact that it comprises at least one step (180) of repeating all the a-g steps for a plurality of test connections of said set of capacitors (4).

**11.** Method according to one or more of claims 9 and 10, **characterized by** the fact that said automatic detection unit (6) comprises at least one step (140) of waiting for a predefined transition insertion time ($t_i$), subsequently to said step (130) of connecting the set of capacitors (4) to the load (5).

**12.** Method according to one or more of claims 9 to 11, **characterized by** the fact that said phase displacement constant (K) is set according to the selected type of connection (FF1, FF2, FF3, FN1, FN2, FN3).

**13.** Method according to one or more of claims 9 to 12, **characterized by** the fact that said first vector components of active power ($W_1$) and reactive power (VAn) are calculated using the following formulas:

$$W_1 = \frac{1}{N} \sum_{i=1}^{N} v_{(i-K)} \, i_i$$

$$VAr_1 = \sqrt{VA_1^2 - W_1^2}$$

where $VA_1$ is the apparent power before the insertion of the set of capacitors (4).

**14.** Method according to one or more of claims 9 to 13, **characterized by** the fact that said second vector components of active power ($W_2$) and reactive power ($VAr_2$) are calculated using the following formulas:

$$W_2 = \frac{1}{N} \sum_{i=1}^{N} v_{(i-K)} \, i_i$$

$$VAr_2 = \sqrt{VA_2^2 - W_2^2}$$

where $VA_2$ is the apparent power following the insertion of the set of capacitors (4).

**Patentansprüche**

**1.** Vorrichtung (1) zur Regelung der Blindleistung in elektrischen Systemen, die mindestens eine Blindleistungsregeleinheit (2) umfasst, die mit einem elektrischen System (3) und mindestens einem Satz von Kondensatoren (4) verbunden ist, wobei die Regeleinheit (2) ausgebildet ist, den Satz von Kondensatoren (4) mit mindestens einer Last (5) des elektrischen Systems (3) in Abhängigkeit von der an der Last (5) gemessenen Blindleistung zu verbinden/ trennen und einen gewünschten Leistungsfaktor zu erhalten, **dadurch gekennzeichnet, dass** sie mindestens eine automatische Erfassungseinheit (6) für die Art der Verbindung umfasst, die zwischen der Regeleinheit (2) und den Strom-/Spannungsleitungen des elektrischen Systems (3) ausgeführt wird, wobei die automatische Erfassungseinheit (6) ausgebildet ist, mindestens die folgenden Schritte auszuführen:

    a. Auswahl einer Art von Verbindung aus den möglichen Arten von Verbindung (FF1, FF2, FF3, FN1, FN2, FN3) zwischen der Regeleinheit (2) und dem elektrischen System (3);
    b. Einstellen einer Phasenverschiebungskonstante (K), welche die Phasendifferenz zwischen Spannung und Strom der ausgewählten Verbindung charakterisiert;
    c. Messen erster Vektorkomponenten einer Wirkleistung ($W_1$) und einer Blindleistung ($VAr_1$) der Last (5) vor dem Einsetzen des Satzes von Kondensatoren (4);

    d. Anschluss des Satzes von Kondensatoren (4) an die Last (5);
    e. Messen zweiter Vektorkomponenten der Wirkleistung ($W_2$) und der Blindleistung ($VAr_2$) der Last (5) nach dem Einsetzen des Satzes von Kondensatoren (4);
    f. Berechnen eines Differenzvektors ($C_{FF1}$, $C_{FF2}$, $C_{FF3}$, $C_{FN1}$, $C_{FN2}$, $C_{FN3}$) als Differenz zwischen den zweiten Vektorkomponenten ($W_2$, $VAr_2$) und den ersten Vektorkomponenten ($W_1$, $VAr_1$);
    g. Wiederholen aller vorgenannten Schritte für alle möglichen Arten von Verbindungen (FF1, FF2, FF3, FN1, FN2, FN3) zwischen der Regeleinheit (2) und dem elektrischen System (3);
    h. aus allen möglichen Arten von Verbindungen (FF1, FF2, FF3, FN1, FN2, FN3) Auswählen der einzigen Verbindung, für die der betreffende berechnete Differenzvektor (C) eine Wirkleistungskomponente von Null aufweist.

**2.** Vorrichtung (1) nach Anspruch 1, **dadurch gekennzeichnet, dass** die automatische Erfassungseinheit (6) ausgebildet ist, alle Schritte a-g für eine Vielzahl von Testanschlüssen des Satzes von Kondensatoren (4) an die Last (5) zu wiederholen, die beim Start der Vorrichtung (1) ausgeführt wurden.

**3.** Vorrichtung (1) nach einem oder mehreren der vorhergehenden Ansprüche, **dadurch gekennzeichnet, dass** die automatische Erfassungseinheit (6) ausgebildet ist, nach dem Schritt des Verbindens des Satzes von Kondensatoren (4) mit der Last (5) mindestens einen Schritt des Wartens auf eine vordefinierte Übergangseinfügungszeit ($t_i$) auszuführen.

**4.** Vorrichtung (1) nach einem oder mehreren der vorhergehenden Ansprüche, **dadurch gekennzeichnet, dass** sie mindestens eine automatische Messeinheit (7) zum Messen des Wertes der Leistungen des mindestens einen Satzes von Kondensatoren (4) umfasst.

**5.** Vorrichtung (1) nach einem oder mehreren der vorhergehenden Ansprüche, **dadurch gekennzeichnet, dass** die Regeleinheit (2) mit einem Spannungsmesseingang und einem Strommesseingang versehen ist.

**6.** Vorrichtung (1) nach einem oder mehreren der vorhergehenden Ansprüche, **dadurch gekennzeichnet, dass** die Phasenverschiebungskonstante (K) in Abhängigkeit von der gewählten Art von Verbindung (FF1, FF2, FF3, FN1, FN2, FN3) eingestellt ist.

**7.** Vorrichtung (1) nach einem oder mehreren der vorhergehenden Ansprüche, **dadurch gekennzeich-**

**net, dass** die ersten Vektorkomponenten der Wirkleistung ($W_1$) und der Blindleistung ($VAr_1$) nach den folgenden Gleichungen berechnet sind:

$$W_1 = \frac{1}{N} \sum_{i=1}^{N} v_{(i-K)}\, i_i$$

$$VAr_1 = \sqrt{VA_1^2 - W_1^2}$$

wobei $VA_1$ die Scheinleistung vor dem Einsetzen des Satzes von Kondensatoren (4) ist.

8. Vorrichtung (1) nach einem oder mehreren der vorhergehenden Ansprüche, **dadurch gekennzeichnet, dass** die zweiten Vektorkomponenten der Wirkleistung ($W_2$) und der Blindleistung ($VAr_2$) nach den folgenden Gleichungen berechnet werden:

$$W_2 = \frac{1}{N} \sum_{i=1}^{N} v_{(i-K)}\, i_i$$

$$VAr_2 = \sqrt{VA_2^2 - W_2^2}$$

wobei $VA_2$ die Scheinleistung nach dem Einsetzen des Satzes von Kondensatoren (4) ist.

9. Verfahren zur Regelung der Blindleistung in elektrischen Systemen, das mindestens einen Schritt zur Regelung der Blindleistung eines elektrischen Systems (3) umfasst, wobei der Regelungsschritt ausgebildet ist, mindestens einen Satz von Kondensatoren (4) mit mindestens einer Last (5) des elektrischen Systems (3) in Abhängigkeit von der an der Last (5) gemessenen Blindleistung zu verbinden/ zu trennen und einen gewünschten Leistungsfaktor zu erhalten, **dadurch gekennzeichnet, dass** es mindestens einen Schritt zum automatischen Erfassen der Art der Verbindung mit dem elektrischen System (3) umfasst, wobei der automatische Erfassungsschritt mindestens die folgenden Schritte umfasst:

   a. einen Schritt (100) der Auswahl einer Art von Verbindung aus den möglichen Arten von Verbindungen (FF1, FF2, FF3, FN1, FN2, FN3) mit einem elektrischen System (3);
   b. einen Schritt (110) des Einstellens einer Phasenverschiebungskonstante (K), welche die Phasendifferenz zwischen Spannung und Strom der ausgewählten Verbindung charakterisiert;

   c. einen Schritt (120) des Messens erster Vektorkomponenten der Wirkleistung ($W_1$) und der Blindleistung ($VAr_1$) einer Last (5) des elektrischen Systems (3) vor dem Einsetzen mindestens eines Satzes von Kondensatoren (4);
   d. einen Schritt (130) des Anschließens des Satzes von Kondensatoren (4) an die Last (5);
   e. einen Schritt (150) des Messens zweiter Vektorkomponenten der Wirkleistung ($W_2$) und der Blindleistung ($VAr_2$) der Last (5) nach dem Einsetzen des Satzes von Kondensatoren (4);
   f. einen Schritt (160) des Berechnens eines Differenzvektors ($C_{FF1}$, $C_{FF2}$, $C_{FF3}$, $C_{FN1}$, $C_{FN2}$, $C_{FN3}$) als Differenz zwischen den zweiten Vektorkomponenten ($W_2$, $VAr_2$) und den ersten Vektorkomponenten ($W_1$, $VAr_1$);
   g. einen Schritt (170) des Wiederholens aller vorgenannten Schritte für alle möglichen Arten von Verbindungen (FF1, FF2, FF3, FN1, FN2, FN3) zwischen der Regeleinheit (2) und dem elektrischen System (3);
   h. einen Schritt (190) der Auswahl, aus allen möglichen Arten von Verbindungen (FF1, FF2, FF3, FN1, FN2, FN3), der einzigen Verbindung, für die der betreffende berechnete Differenzvektor (C) eine Wirkleistungskomponente von Null aufweist.

10. Verfahren nach Anspruch 9, **dadurch gekennzeichnet, dass** es mindestens einen Schritt (180) der Wiederholung aller Schritte a-g für eine Vielzahl von Testanschlüssen des Satzes von Kondensatoren (4) umfasst.

11. Verfahren nach einem oder mehreren der Ansprüche 9 und 10, **dadurch gekennzeichnet, dass** die automatische Erfassungseinheit (6) mindestens einen Schritt (140) des Wartens auf eine vordefinierte Übergangseinfügungszeit ($t_i$) im Anschluss an den Schritt (130) des Anschließens des Satzes von Kondensatoren (4) an die Last (5) umfasst.

12. Verfahren nach einem oder mehreren der Ansprüche 9 bis 11, **dadurch gekennzeichnet, dass** die Phasenverschiebungskonstante (K) in Abhängigkeit von der gewählten Art von Verbindung (FF1, FF2, FF3, FN1, FN2, FN3) eingestellt wird.

13. Verfahren nach einem oder mehreren der Ansprüche 9 bis 12, **dadurch gekennzeichnet, dass** die ersten Vektorkomponenten der Wirkleistung ($W_1$) und der Blindleistung ($VAr_1$) nach den folgenden Gleichungen berechnet werden:

$$W_1 = \frac{1}{N} \sum_{i=1}^{N} v_{(i-K)}\, i_i$$

$$VAr_1 = \sqrt{VA_1^2 - W_1^2}$$

wobei $VA_1$ die Scheinleistung vor dem Einsetzen des Satzes von Kondensatoren (4) ist.

14. Verfahren nach einem oder mehreren der Ansprüche 9 bis 13, **dadurch gekennzeichnet, dass** die zweiten Vektorkomponenten der Wirkleistung ($W_2$) und der Blindleistung ($VAr_2$) nach den folgenden Gleichungen berechnet werden:

$$W_2 = \frac{1}{N} \sum_{i=1}^{N} v_{(i-K)} \, i_i$$

$$VAr_2 = \sqrt{VA_2^2 - W_2^2}$$

wobei $VA_2$ die Scheinleistung nach dem Einsetzen des Satzes von Kondensatoren (4) ist.

**Revendications**

1. Appareil (1) de régulation de la puissance réactive dans des systèmes électriques, comprenant au moins une unité de régulation (2) de la puissance réactive connectée en fonctionnement à un système électrique (3) et à au moins un ensemble de condensateurs (4), ladite unité de régulation (2) étant configurée pour connecter/déconnecter ledit ensemble de condensateurs (4) à/par rapport à au moins une charge (5) dudit système électrique (3) en fonction de la puissance réactive mesurée sur la charge (5) et pour obtenir un facteur de puissance souhaité, **caractérisé en ce qu'**il comprend au moins une unité de détection automatique (6) du type de connexion réalisée entre ladite unité de régulation (2) et les lignes de courant/tension dudit système électrique (3), ladite unité de détection automatique (6) étant configurée pour réaliser au moins les étapes suivantes :

   a. la sélection d'un type de connexion parmi les types possibles de connexion (FF1, FF2, FF3, FN1, FN2, FN3) entre ladite unité de régulation (2) et ledit système électrique (3) ;
   b. la définition d'une constante de déplacement de phase (K) qui caractérise la différence de phase entre une tension et un courant de ladite connexion sélectionnée ;
   c. la mesure de premières composantes vectorielles de puissance active ($W_1$) et de puissance réactive ($VAr_1$) de ladite charge (5) avant l'insertion dudit ensemble de condensateurs (4) ;
   d. la connexion dudit ensemble de condensateurs (4) à ladite charge (5) ;
   e. la mesure de secondes composantes vectorielles de puissance active ($W_2$) et de puissance réactive ($VAr_2$) de ladite charge (5) après l'insertion dudit ensemble de condensateurs (4) ;
   f. le calcul d'un vecteur différentiel ($C_{FF1}$, $C_{FF2}$, $C_{FF3}$, $C_{FN1}$, $C_{FN2}$, $C_{FN3}$) comme la différence entre lesdites secondes composantes vectorielles ($W_2$, $VAr_2$) et lesdites premières composantes vectorielles ($W_1$, $VAr_1$) ;
   g. la répétition de toutes les étapes susmentionnées pour tous les types possibles de connexion (FF1, FF2, FF3, FN1, FN2, FN3) entre ladite unité de régulation (2) et ledit système électrique (3) ;
   h. parmi tous les types possibles de connexion (FF1, FF2, FF3, FN1, FN2, FN3), la sélection de la seule connexion pour laquelle le vecteur différentiel calculé pertinent (C) a une composante de puissance active nulle.

2. Appareil (1) selon la revendication 1, **caractérisé en ce que** ladite unité de détection automatique (6) est configurée pour répéter toutes les étapes a-g pour une pluralité de connexions de test dudit ensemble de condensateurs (4) à ladite charge (5), réalisées lors du démarrage dudit appareil (1).

3. Appareil (1) selon une ou plusieurs des revendications précédentes, **caractérisé en ce que** ladite unité de détection automatique (6) est configurée pour réaliser au moins une étape d'attente pendant un temps prédéfini d'insertion de transition ($t_i$), après ladite étape de connexion de l'ensemble de condensateurs (4) à la charge (5).

4. Appareil (1) selon une ou plusieurs des revendications précédentes, **caractérisé en ce qu'**il comprend au moins une unité de mesure automatique (7) pour mesurer la valeur de puissances dudit au moins un ensemble de condensateurs (4).

5. Appareil (1) selon une ou plusieurs des revendications précédentes, **caractérisé en ce que** ladite unité de régulation (2) est dotée d'une entrée de mesure de tension et d'une entrée de mesure de courant.

6. Appareil (1) selon une ou plusieurs des revendications précédentes, **caractérisé en ce que** ladite constante de déplacement de phase (K) est définie en fonction du type sélectionné de connexion (FF1, FF2, FF3, FN1, FN2, FN3).

7. Appareil (1) selon une ou plusieurs des revendications précédentes, **caractérisé en ce que** lesdites premières composantes vectorielles de puissance

active ($W_1$) et de puissance réactive ($VAr_1$) sont calculées en utilisant les formules suivantes :

$$W_1 = \frac{1}{N} \sum_{i=1}^{N} v_{(i-K)} i_i$$

$$VAr_1 = \sqrt{VA_1^2 - W_1^2}$$

où $VA_1$ est la puissance apparente avant l'insertion de l'ensemble de condensateurs (4).

8. Appareil (1) selon une ou plusieurs des revendications précédentes, **caractérisé en ce que** lesdites secondes composantes vectorielles de puissance active ($W_2$) et de puissance réactive (Var2) sont calculées en utilisant les formules suivantes :

$$W_2 = \frac{1}{N} \sum_{i=1}^{N} v_{(i-K)} i_i$$

$$VAr_2 = \sqrt{VA_2^2 - W_2^2}$$

où $VA_2$ est la puissance apparente à la suite de l'insertion de l'ensemble de condensateurs (4).

9. Procédé de régulation de la puissance réactive dans des systèmes électriques, comprenant au moins une étape de régulation de la puissance réactive d'un système électrique (3), ladite étape de régulation étant adaptée pour connecter/déconnecter au moins un ensemble de condensateurs (4) à/par rapport à au moins une charge (5) dudit système électrique (3) en fonction de la puissance réactive mesurée sur la charge (5) et pour obtenir un facteur de puissance souhaité, **caractérisé en ce qu'**il comprend au moins une étape de détection automatique du type de connexion réalisée avec ledit système électrique (3), dans lequel ladite étape de détection automatique comprend au moins les étapes suivantes :

    a. une étape (100) de sélection d'un type de connexion parmi les types possibles de connexion (FF1, FF2, FF3, FN1, FN2, FN3) avec un système électrique (3) ;
    b. une étape (110) de définition d'une constante de déplacement de phase (K) qui caractérise la différence de phase entre une tension et un courant de ladite connexion sélectionnée ;
    c. une étape (120) de mesure de premières composantes vectorielles de puissance active ($W_1$)

et de puissance réactive ($VAr_1$) d'une charge (5) dudit système électrique (3) avant l'insertion d'au moins un ensemble de condensateurs (4) ;
    d. une étape (130) de connexion dudit ensemble de condensateurs (4) à ladite charge (5) ;
    e. une étape (150) de mesure de secondes composantes vectorielles de puissance active ($W_2$) et de puissance réactive ($VAr_2$) de ladite charge (5) après l'insertion dudit ensemble de condensateurs (4) ;
    f. une étape (160) de calcul d'un vecteur différentiel ($C_{FF1}$, $C_{FF2}$, $C_{FF3}$, $C_{FN1}$, $C_{FN2}$, $C_{FN3}$) comme la différence entre lesdites secondes composantes vectorielles ($W_2$, $VAr_2$) et lesdites premières composantes vectorielles ($W_1$, $VAr_1$) ;
    g. une étape (170) de répétition de toutes les étapes susmentionnées pour tous les types possibles de connexion (FF1, FF2, FF3, FN1, FN2, FN3) entre ladite unité de régulation (2) et ledit système électrique (3) ;
    h. une étape (190) de sélection, parmi tous les types possibles de connexion (FF1, FF2, FF3, FN1, FN2, FN3), de la seule connexion pour laquelle le vecteur différentiel calculé pertinent (C) a une composante de puissance active nulle.

10. Procédé selon la revendication 9, **caractérisé en ce qu'**il comprend au moins une étape (180) de répétition de toutes les étapes a-g pour une pluralité de connexions de test dudit ensemble de condensateurs (4).

11. Procédé selon une ou plusieurs des revendications 9 à 10, **caractérisé en ce que** ladite unité de détection automatique (6) comprend au moins une étape (140) d'attente pendant un temps prédéfini d'insertion de transition ($t_i$), après ladite étape (130) de connexion de l'ensemble de condensateurs (4) à la charge (5).

12. Procédé selon une ou plusieurs des revendications 9 à 11, **caractérisé en ce que** ladite constante de déplacement de phase (K) est définie en fonction du type sélectionné de connexion (FF1, FF2, FF3, FN1, FN2, FN3).

13. Procédé selon une ou plusieurs des revendications 9 à 12, **caractérisé en ce que** lesdites premières composantes vectorielles de puissance active ($W_1$) et de puissance réactive ($VAr_1$) sont calculées en utilisant les formules suivantes :

$$W_1 = \frac{1}{N} \sum_{i=1}^{N} v_{(i-K)} i_i$$

$$VAr_1 = \sqrt{VA_1^2 - W_1^2}$$

où $VA_1$ est la puissance apparente avant l'insertion de l'ensemble de condensateurs (4).

**14.** Procédé selon une ou plusieurs des revendications 9 à 13, **caractérisé en ce que** lesdites secondes composantes vectorielles de puissance active ($W_2$) et de puissance réactive ($Var_2$) sont calculées en utilisant les formules suivantes :

$$W_2 = \frac{1}{N} \sum_{i=1}^{N} v_{(i-K)} i_i$$

$$VAr_2 = \sqrt{VA_2^2 - W_2^2}$$

où $VA_2$ est la puissance apparente à la suite de l'insertion de l'ensemble de condensateurs (4).

Fig.1

EP 3 682 520 B1

# Fig.2

| | $\Delta\phi$ | K | K (N=120) |
|---|---|---|---|
| FF1 | 90° | N/4 | 30 |
| FF2 | -30° | -N/12 | -10 |
| FF3 | -150° | -N*5/12 | -50 |
| FN1 | 0° | 0 | 0 |
| FN2 | 120° | N/3 | 40 |
| FN3 | -120° | -N/3 | -40 |

Fig.3

EP 3 682 520 B1

Fig.4

Fig.5

EP 3 682 520 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008106241 A1
- US 2016043635 A1

- US 2004164718 A1